# EUROPEAN PATENT APPLICATION

(11) **EP 4 722 970 A1**
(43) Date of publication of application: **08.04.2026**
(21) Application number: 24204994.8
(22) Date of filing: 07.10.2024
(51) Int. Cl.: G06F 30/23, B21J 9/20, B30B 15/26, G06F 30/27, G06F 113/24, G06F 119/14, G06F 111/06

(54) **DEVICE, METHOD AND SYSTEM FOR DETERMINING AND EXECUTING FORMING SEQUENCES OF A FORMING PROCESS**

(71) Applicant: Hatebur Umformmaschinen AG, 4153 Reinach (CH)
(72) Inventor: LEIBUNDGUT, Stephan, 4417 Ziefen (CH); FASSBENDER, Martin, 4112 Flüh (CH); BÜRGIN, Christian, 4460 Gelterkinden (CH)
(74) Representative: IPrime Rentsch Kaelin AG

(57) **Abstract**

The present disclosure relates to a method, system, and forming device 10 for optimizing and executing forming sequences 30 in forming processes using a deep neural network 20 and an optimization algorithm 21. The method involves training the neural network 20 with input device data 221, such as a shape of a tool 101 of the forming device 10, deformation force, speed, and displacement, and input workpiece data 222 to predict output data 23 like a shape of a workpiece 105. The forming device 10 includes besides the tool 101 with upper 1012 and lower dies 1011, a drive mechanism 103, and a controller 106 configured to execute the forming sequences 30 determined by the neural network 20 and optimization algorithm 21.

## Description

### Field of the Invention

The present disclosure relates to a forming device, method and system according to the general terms of the patent claims.

### Background of the Invention

Forming technologies are essential in manufacturing, providing a means to shape materials by applying mechanical forces that cause plastic deformation. These processes are widely used in the production of parts for industries such as automotive, aerospace, and heavy machinery, where precision and material strength are critical. The fundamental principle of forming involves reshaping a material without removing any part of it, preserving its volume and integrity while achieving the desired geometry. The deformation is achieved by applying compressive forces, which exceed the material's yield strength but remain within its failure limits.

One type of forming is forging, which is distinguished by its use of localized compressive forces to shape metal. Typically performed at elevated temperatures, forging enhances the mechanical properties of the material, such as its strength and toughness, due to the grain refinement that occurs during deformation. Forging processes can be classified into various types, including cold and hot forging as well as open-die and closed-die forging, each suitable for different applications depending on the complexity of the part and the material used. This process is widely applied in the manufacturing of critical components such as crankshafts, gears, and connecting rods, where material integrity and performance under high stress are paramount.

In addition to its strength-enhancing properties, forging is also highly efficient and cost-effective. Compared to other forming methods like casting and subtractive processes such as machining, forging offers advantages in terms of manufacturing costs, component safety, and environmental impact. The ability to produce parts with a reduced carbon footprint makes forging a preferred choice for industries focused on sustainability. This is particularly relevant in industries with large production volumes, such as automotive and aerospace, where lightweight construction and CO₂ reduction are becoming increasingly important.

Globally, the demand for forged parts remains substantial. In industries where precision and durability are particularly important, forged components such as nuts, bolts, and more complex parts like wheel carriers and pinions are produced in large quantities. Despite efforts to reduce the weight of components to meet environmental goals, the total tonnage of forged parts produced worldwide remains relatively constant. However, the actual number of individual components manufactured continues to rise, as lighter materials and more efficient processes enable greater output without increasing the overall material volume.

Furthermore, advances in forging technology have made it possible to optimize the manufacturing process through the use of simulations. Material flow simulations, for example, allow manufacturers to predict the flow of material and ensure proper die filling while also calculating the stresses experienced by the workpiece and tooling. However, while these simulations are powerful, they are often time-consuming, with complex calculations sometimes taking 10 or more hours to complete. In addition, finding the optimal forging sequence for multi-stage processes remains a challenge, often relying on the expertise of seasoned professionals or extensive trial-and-error testing.

Besides forging, there are also other forming processes such as bending, rolling, and extrusion. Bending involves applying force to a material, typically sheet metal, to create specific angles or curves without breaking it. Rolling reduces the thickness of a material by passing it through rollers, a process often used in producing flat or shaped products. Extrusion forces material through a die to create objects with a fixed cross-sectional profile.

Furthermore, artificial intelligence (Al) has increasingly become a transformative tool in the manufacturing industry such as in forming. The integration of AI into the manufacturing processes allows for enhanced precision, predictive maintenance, and optimized production efficiency. By employing machine learning algorithms and neural networks, modern forming systems can process vast amounts of data from sensors and control systems to improve operational accuracy. AI systems, through continuous learning from real-time production data, can predict failures, optimize machine settings, and enhance quality control measures.

The following prior art exist with regards to the presented invention.

WO2020064030A1 discloses a diagnostic system for forming machines, designed to reduce the risk of machine damage and enhance monitoring and productivity. Traditional diagnostic systems are inadequate for forming machines, which endure higher force loads and vibrations. This system uses multiple sensors (e.g., vibration, strain, and distance) and compares their measurements with stored fault-free and fault-state models. A neural network further enhances fault detection by learning from previous machine behavior, improving accuracy in recognizing different states and potential issues.

The disclosed precision forging process for bell-shaped shell face teeth in CN116128798A uses machine vision and deep learning to enhance quality control. The method includes capturing detection and reference images of the teeth, segmenting them into blocks, and processing these blocks through convolutional neural networks to extract feature vectors. These vectors are organized into global feature matrices, which are compared using a Siamese network to detect differences in high-dimensional feature space. A classifier then determines if the forging quality meets predefined standards.

CN105652666A presents a method for controlling the upper beam speed in large die forging presses using a neural network. The control neural network calculates the system input based on the difference between predicted and actual beam speeds, adjusting control parameters in real time. The method involves initializing model parameters and training the predictive and control neural networks offline with historical forging data. The control network receives real-time feedback, adjusting weights in both input-hidden and hidden-output layers to optimize system control.

JP2019111566A describes an air drop hammer learning system that controls valve displacement during forging operations using compressed air. It utilizes machine learning to optimize valve movement by analyzing data such as valve displacement, air pressure, and the temperature of the heated metal. Sensors detect these parameters, transmitting the data to a computer, which calculates optimal control settings.

CN1895809A discloses a control system for a large die forging hydraulic press that regulates a distributor's movement using a neural network. The system includes absolute photoelectric encoders and a programmable logic controller to track and adjust the rotation angle of the distributor. The neural network algorithm calculates the optimal timing for turning control valves on and off, based on pressure, angle errors, and error rates. The process is divided into two phases: a rapid adjustment phase to bring the distributor close to the target angle and a fine-tuning phase for precise corrections.

EP4272883A1 introduces a machine learning-based method for predicting and controlling the out-of-roundness of steel pipes during the UOE manufacturing process. The method collects operational data from key stages, such as the U-press and O-press steps, and uses numerical computations and finite element analysis to generate training data. Machine learning algorithms, like neural networks or random forests, are then applied to create a model that accurately predicts the pipe's final out-of-roundness after the pipe expansion step.

The prior art faces significant challenges in optimizing the manufacturing process as a whole. Traditional simulations, such as finite element analysis, are computationally intensive and time-consuming, often making them impractical for rapid decision-making or real-time adjustments. Additionally, while prior art has applied machine learning and neural networks to specific aspects like fault detection or quality control these approaches do not effectively model the entire forming process to be able to predict suitable process parameters for a particular desired shape that is to be formed. Nowadays, such predictions often depend heavily on the manual expertise of seasoned engineers, making the process less adaptable and more prone to human error. This reliance on individual experience can lead to inconsistencies and hinders the ability to systematically optimize for factors like production time and energy efficiency.

### Summary of the Invention

One objective of the disclosure is to overcome at least some of the disadvantages of the prior art. It is also an objective of the present disclosure to provide a method, a system and a forming machine to allow for forming workpieces in an optimised manner in order to reduce the costs of prototyping and to reduce the dependence on a human factor.

At least one of these objectives has been solved by the features of the independent patent claims.

According to a first aspect of the present disclosure provided is a method for adjusting input device data of a forming step in a forming sequence comprising the following steps. First, generating pairs of input data and corresponding ground truth output data of the at least one forming step in the forming sequence via a forming device and/or a computer-based simulation, wherein the input data comprise input device data of the forming device and input workpiece data, wherein the input device data include at least one of: a shape of a tool, deformation force F, deformation speed v, tool displacement d; the input workpiece data include at least an input shape of a workpiece; and the output data include at least an output shape of the workpiece;

Second, providing a deep neural network configured to model a forming process performed by the forming device to form a workpiece, wherein the deep neural network comprises an input layer, one or more hidden layers, and an output layer.

Third, supplying the deep neural network with the pairs of the input data and the corresponding ground truth output data.

Fourth, training the deep neural network to predict output data of the at least one forming step based on the input device data and the input workpiece data of the at least one forming step by minimizing a difference between the predicted output data and the ground truth output data.

Lastly, using the predicted output data to adjust the input device data of the forming device.

The method described offers several distinct advantages, making it a powerful tool for predicting output data of forming processes in manufacturing environments. By employing a trained deep neural network, the method enables significant improvements in process efficiency. Traditional forming methods often rely on time-consuming trial and error to fine-tune parameters such as deformation force, speed, and tool displacement. In contrast, this method minimizes manual intervention and accelerates the optimization process, ultimately reducing production time and enhancing throughput.

In addition, by generating or producing data from the forming device, the method captures real-world conditions and the inherent variabilities of the physical manufacturing environment. Data collected from the actual forming process include all the complexities of material behaviours, equipment characteristics, and environmental factors that simulations might not fully replicate. This approach ensures that the deep neural network is trained on data that closely reflect true operating conditions.

Alternatively, or additionally, by generating training data through the computer-based simulation, the method offers significant advantages in terms of cost efficiency and the ability to explore a wide range of process scenarios. During the simulation, input parameters such as deformation force, deformation speed, tool displacement, and initial workpiece shape are varied to create a wide range of forming scenarios. The simulation can be repeated for different process settings, material properties, and tool geometries, resulting in a large, diverse dataset.

In an advantageous embodiment, the simulation is specifically a finite element-based simulation. The FE simulation models the actual forming process by discretizing the workpiece and tooling into a mesh of finite elements interconnected at nodes. It solves the governing equations of continuum mechanics, accounting for both material and geometric nonlinearities inherent in large deformation processes like forging.

In yet another advantageous embodiment, the simulation is a particle-based simulation, such as Smoothed Particle Hydrodynamics or the Discrete Element Method. Particle-based simulations represent the workpiece material as a collection of discrete particles or elements that interact according to specified physical laws, without relying on a fixed mesh.

The simulation can be advantageously replaced by a surrogate model, particularly an AI-based surrogate model, to generate the pairs of input and corresponding output data more rapidly. Surrogate models approximate the behaviour of complex simulations, providing faster predictions while maintaining acceptable accuracy. By employing an AI-based surrogate model the method can efficiently generate large datasets needed for training the deep neural network. This approach reduces computational costs and time associated with running detailed simulations.

Furthermore, the ability of the deep neural network to predict the output of each forming step provides manufacturers with a more reliable process. The neural network can forecast the final workpiece shape as well as strain distribution, and other critical factors with high precision, which reduces deviations from the desired geometry and enhances overall product quality. This consistency is particularly valuable in industries where precision is crucial, such as automotive and aerospace.

Lastly, using the predicted output data by the trained deep neural network to adjust the input device data of the forming device offers the advantage of creating an intelligent control system for the forming process. This approach enables finetuning of parameters such as deformation force, speed, and tool displacement as well as its shape based on the predictions of the trained neural network and input shape of the workpiece leading to improved product quality by reducing deviations from desired geometries.

It is also possible to modify the shape of the semi-finished product, i.e. the initial, undeformed shape of the workpiece at the very beginning of the forming process, based on the predicted output data, to further optimise and fine-tune the process.

Moreover, the method described is suitable for a wide range of forming processes, including but not limited to cold and hot forging, bending, deep drawing, and rolling. In cold and hot forging, the method can predict process parameters such as deformation force, speed, and tool displacement to enhance precision and material properties. In bending processes, the method can ensure the accurate formation of specific angles and shapes while, for instance, minimizing stress on the material. For deep drawing and sheet metal forming, the present disclosure allows for the precise prediction and subsequently also control of thinning and wrinkling, improving part quality.

The present disclosure can be supplemented and further improved as desired by the following further embodiments, each of which is advantageous on its own.

In an advantageous embodiment, the method further includes an optimization of the input device data of the at least one forming step in the forming sequence using the trained deep neural network to obtain desired output data, wherein the input device data of the at least one forming step are adjusted via an optimization algorithm to minimize a difference between the predicted output data and the desired output data.

This embodiment offers advantages by enabling both the process parameters and the tool geometry to be optimized computationally through the integration of a trained deep neural network and an optimization algorithm. By adjusting input device data-such as deformation force, deformation speed, tool displacement, as well as the shape of the tool-the system can precisely tailor the forming process to produce the desired workpiece characteristics.

One primary advantage is the substantial reduction in time and resources typically required for tool design and process optimization. Traditionally, designing and manufacturing forming tools involve multiple iterations of physical prototyping and testing, which are both costly and time-consuming. The present disclosure allows for the optimization of the tool shape to be conducted entirely computationally, eliminating the need for physical trials during the design phase. This computational approach accelerates the development cycle, enabling manufacturers to respond more quickly to market demands and reduce time-to-market for new products.

Moreover, the optimization algorithm can explore a vast design space, considering numerous potential combinations of process parameters and tool geometries that would be impractical to test physically. This comprehensive exploration increases the likelihood of identifying an optimal or near-optimal solution that meets specific production requirements. By minimizing the difference between the predicted and desired outputs, the system enhances product quality, ensuring that the formed workpieces consistently meet precise specifications.

Furthermore, optimizing the tool shape computationally allows for the incorporation of practical manufacturing constraints. The optimization algorithm can consider factors such as manufacturability, tool life, and compatibility with existing equipment.

In another advantageous embodiment, the optimization algorithm is a genetic algorithm, simulated annealing algorithm, or reinforcement learning based algorithm.

When employing a genetic algorithm, the optimization process is inspired by the principles of natural selection, wherein an initial population of potential solutions (e.g., sets of forming parameters and tool shapes) is generated. Each individual in the population is evaluated using a fitness function, which could include factors such as the accuracy of the predicted workpiece shape, material integrity, or energy efficiency. Through iterative cycles of selection, crossover, and mutation, the genetic algorithm refines the population towards increasingly optimal solutions, gradually improving the tool design and process parameters.

Alternatively, simulated annealing is employed to optimize forming sequences by simulating the cooling process of metals, where the system explores the solution space while avoiding being trapped in local minima. The method randomly perturbs the process parameters or tool geometries, accepting both improvements and, with a certain probability, less optimal solutions. Over time, the probability of accepting suboptimal solutions decreases, allowing the algorithm to converge on the global optimum for the desired workpiece shape and process efficiency.

In yet another advantageous approach, reinforcement learning can be utilized as the optimization algorithm, wherein the algorithm learns to make optimal decisions by interacting with the forming process environment. In an advantageous embodiment, the optimization process is framed as a sequential decision-making task, where the algorithm receives feedback (in the form of rewards or penalties) based on the outcome of each forming step. Over time, the algorithm learns to select the process parameters and tool configurations that maximize cumulative performance metrics, such as workpiece shape, production time, material usage, and energy efficiency.

In another advantageous embodiment, the trained deep neural network and/or the optimization algorithm are operated on a cloud server.

Operating the trained deep neural network and the optimization algorithm on a cloud server significantly enhances computational efficiency and processing speed. Deep learning models and optimization algorithms require considerable computational resources, especially when dealing with large datasets and complex calculations inherent in forming processes. Cloud servers offer high-performance computing capabilities with scalable resources that can be adjusted dynamically based on demand.

The integration of real-time sensor data further amplifies the benefits of cloud computing in this context. Sensors installed on the forming equipment collect in-situ measurements of critical parameters such as temperature, force, displacement, and material properties during the forming process. Transmitting this data to the cloud in real time allows the deep neural network to process current operational conditions instantaneously. The optimization algorithm can then adjust the forming sequences on-the-fly, ensuring that the process remains optimized despite any fluctuations or anomalies detected by the sensors.

This real-time optimization is particularly advantageous in maintaining product quality and consistency. Manufacturing processes are subject to various uncertainties, including material variability, environmental conditions, and equipment wear. By continuously updating the model with live data, the system can adapt to these changes immediately, minimizing defects and reducing waste.

Additionally, operating on a cloud server facilitates remote access and collaboration among various stakeholders, including engineers, data scientists, and operators located in different geographical regions. This accessibility enables real-time monitoring, adjustments, and updates to the forming process, improving responsiveness to changes in production requirements or unexpected issues.

In another advantageous embodiment, the input data further include at least one of: material properties of the workpiece, temperature of the tool, and initial temperature of the workpiece.

The material properties of the workpiece, such as yield strength, elasticity, plasticity, strain hardening, and thermal conductivity, are important factors that influence the behaviour of the material under deformation. By including these properties in the input data, the system can account for variations in material composition and microstructure, leading to more accurate predictions of workpiece deformation, stress distribution, and overall performance.

In addition, the temperature of the tool plays a significant role in forming processes, particularly in hot forging or other high-temperature operations. The temperature of the tool can affect friction, heat transfer, and material flow, and including this parameter allows the deep neural network to consider these effects when predicting the outcome of the forming process.

The initial temperature of the workpiece is another key parameter, particularly in thermal forming processes such as hot forging or extrusion. The initial temperature influences the material's plasticity, flow characteristics, and susceptibility to strain hardening. By incorporating the initial workpiece temperature into the input data, the method can predict and advantageously also optimize the forming process for different thermal conditions, ensuring that the workpiece is deformed within the optimal temperature range for achieving the desired shape and mechanical properties.

In another advantageous embodiment, the output data further include at least one of: stress distribution, strain distribution, and temperature distribution within the workpiece.

Incorporating these additional output variables enables the deep neural network to provide a more comprehensive prediction of the forming process outcomes, offering insights not only into the final shape of the workpiece but also into its internal mechanical and thermal state after deformation.

The stress distribution within the workpiece is critical for assessing the integrity and durability of the formed workpiece. By including stress distribution as part of the output data, the method can predict areas within the workpiece that may experience high stress concentrations, which could lead to material failure or fatigue. This allows for the prediction and advantageously also optimization of process parameters, i.e. input device data and tool designs to minimize stress hotspots, ensuring that the formed part meets required safety and performance standards, particularly in industries such as automotive and aerospace.

The strain distribution is another important variable that affects the material's deformation characteristics and mechanical properties. By predicting how strain is distributed across the workpiece during the forming process, the system can ensure that the material is not overstrained, preventing issues such as cracking, tearing, or thinning in sheet metal forming processes.

The temperature distribution within the workpiece is particularly relevant for hot forming processes such as hot forging or deep drawing. Temperature gradients can significantly affect material flow, phase transformation, and grain structure evolution, all of which influence the mechanical properties and final shape of the part.

In another advantageous embodiment, the optimization algorithm is configured to minimize production time of a desired shape of the workpiece and/or a microstructure of the workpiece and/or energy consumption of a forming process.

Configuring the optimization algorithm to minimize production time offers significant benefits in manufacturing efficiency and cost reduction. By accelerating the forming process, manufacturers can increase throughput and meet higher demand without the need for additional machinery or labor. Reducing production time diminishes operational costs associated with labor, equipment wear, and maintenance, thereby enhancing overall profitability.

Optimizing the microstructure of the workpiece through the algorithm presents substantial advantages in terms of product quality and performance. The microstructure of a material directly influences its mechanical properties, such as strength, hardness, ductility, and resistance to fatigue and wear. By controlling process parameters to achieve a desired microstructure, the method ensures that the final product meets stringent quality standards and application-specific requirements. This capability is particularly valuable in industries such as aerospace, automotive, and medical devices, where material properties are paramount. Enhancing the microstructural characteristics can lead to longer product life and improved safety.

Furthermore, configuring the optimization algorithm to reduce energy consumption aligns with growing environmental concerns and regulatory pressures. Energy efficiency in manufacturing processes not only lowers operational costs but also reduces the environmental footprint of production activities. This reduction in energy consumption can also result in lower utility costs, contributing to overall cost savings.

Finally, integrating these optimization objectives within the algorithm allows for a multi-objective optimization approach. The algorithm can balance trade-offs between production time, microstructural properties, and energy consumption to achieve an optimal solution that meets the manufacturer's priorities.

In another advantageous embodiment, the forming process is cold or hot forging process.

Forging is a fundamental manufacturing technique widely used in industries such as automotive, aerospace, and heavy machinery, where components are required to possess high strength and durability. By integrating the method into cold or hot forging operations, manufacturers can predict and advantageously also optimize process parameters to achieve desired workpiece shapes with greater precision and consistency.

In cold forging, the material is formed at or near room temperature, which preserves its original microstructure and results in superior surface finishes and dimensional accuracy. However, cold forging demands higher deformation forces and poses challenges related to material ductility and tool wear. By utilizing the optimization algorithm in conjunction with the deep neural network, the method enables precise control over at least one of the process parameters such as deformation forces, speeds, and tool movements. This control minimizes the risk of defects such as cracking or excessive tool wear, enhancing the reliability and longevity of both the tools and the produced components.

Conversely, hot forging involves deforming the material at elevated temperatures, above its recrystallization point. This process reduces the material's yield strength, allowing for easier shaping and the production of more complex geometries. Hot forging also improves the material's mechanical properties through grain refinement. However, it introduces complexities related to temperature management, scale formation, and dimensional control due to thermal expansion. The method can address these challenges by optimizing temperature profiles and/or deformation parameters, and/or tool interactions. The deep neural network predicts the outcomes of various process settings, while the optimization algorithm fine-tunes or adjusts these settings to achieve the desired workpiece shape and possibly also its microstructure.

Furthermore, the method's application to forging processes enhances the ability to model predict and optimize multi-stage forming sequences. Forging often involves multiple deformation steps to gradually achieve the final geometry. The method allows for the comprehensive simulation of these stages, accounting for the cumulative effects on the material's shape, microstructure, and residual stresses.

In another advantageous embodiment, the method further comprises updating or retraining the deep neural network with data collected during the forming process.

Updating the neural network with measured data mitigates the discrepancies that often arise between simulated models and real-world conditions. Over time, even minor deviations can lead to significant errors in production if not corrected. By retraining the network with current data, the system compensates for these deviations, ensuring that the predicted outputs remain aligned with actual outcomes.

This is made possible by the use of a sensor, sensor module or a set of sensors, which collects comprehensive data sets including temperature, force, displacement and other critical parameters such as a shape of the workpiece. This granular data provides deeper insight into the forming process, allowing the neural network to capture complex patterns and relationships that may not be apparent in static models. The increased robustness of the data contributes to the development of more robust predictive models capable of handling a wider range of scenarios and anomalies.

In another advantageous embodiment a shape of the workpiece is represented implicitly.

Implicit representation involves defining the geometry of the workpiece through mathematical functions or equations, such as level-set methods or signed distance functions, rather than explicitly defining every point on its surface. This approach allows for a smooth and continuous description of complex geometries without the need for detailed meshing or discretization.

One primary advantage is the ability to handle complex and evolving geometries efficiently. During the forming process, the workpiece undergoes significant deformations that can be challenging to track using explicit representations. Implicit methods naturally accommodate topological changes, such as splitting or merging of material regions, without the need for remeshing.

In another advantageous embodiment a shape of the tool is represented explicitly.

Explicit representation involves defining the geometry through discrete elements-such as vertices, edges, and faces in a mesh-or detailed CAD models. This method provides a clear and exact description of the tool's geometry, which is crucial for accurate fabrication and simulation.

Representing the shape of the tool explicitly offers significant benefits by allowing users or engineers to define and control the complexity of the tool's geometry precisely. Controlling the complexity of the tool through explicit representation ensures that the tool can be fabricated using readily available equipment and techniques, reducing production time and costs. It allows for prediction and advantageously also optimization of the tool design to meet performance requirements without unnecessary complexity that could hinder manufacturability.

In a particularly advantageous embodiment, the shape of the tool is represented as a point cloud or polygon mesh. This approach allows engineers to define precisely how many vertices constitute the geometrical representation of the tool, effectively controlling the complexity and resolution of the tool's shape. Moreover, constraints can be imposed on the maximum translation or displacement of each vertex from its default position, which might be a standard geometric shape such as a cube. By limiting the movement of vertices, the design remains within feasible manufacturing tolerances, preventing the creation of overly intricate geometries that are difficult or expensive to fabricate.

For example, allowing certain vertices to lie only in a predefined plane and others to lie in a different plane perpendicular to the first plane can simplify machining processes and reduce production costs by allowing the use of standard cutting tools and techniques.

A further aspect of the present disclosure relates to a forming device for forming a workpiece. The forming device comprises a tool comprising an upper die and a lower die, a drive mechanism configured to actuate the upper die of the tool, a controller configured to control the drive mechanism as well as a trained deep neural network with input device data and an optimization algorithm. Furthermore, the controller is configured to control the drive mechanism to execute the input device data determined by the trained deep neural network and the optimization algorithm

The integration of a trained deep neural network and optimization algorithm directly into the forming device allows for real-time process optimization. The deep neural network, having been trained on extensive datasets representing various forming sequences consisting of at least one forming step and outcomes, can predict the output data based on given input device data as well as input workpiece shape. The optimization algorithm utilizes these predictions to determine the optimal forming sequences, by optimizing the input device data such as deformation force F, shape of a tool, deformation speed v and tool displacement d, required to achieve the desired workpiece shape and advantageously also its properties. By embedding these computational tools within the forming device's control system, adjustments to the forming process can be made swiftly and automatically, without the need for external computation or manual intervention.

Additionally, the incorporation of the deep neural network as well as the optimization algorithm within the forming device enhances operational efficiency. By automating the optimization of forming sequences, the device reduces reliance on operator expertise and manual adjustments. This not only streamlines the production process but also mitigates the potential for human error. Operators can focus on monitoring overall system performance rather than adjusting individual parameters, leading to improved productivity and reduced labor costs.

The present disclosure can be supplemented and further improved as desired by the following further embodiments, each of which is advantageous on its own.

In an advantageous embodiment, the forming device is a press or a power hammer.

Presses and power hammers are established tools in the forming industry, renowned for their ability to exert substantial forces required for shaping various materials. By integrating the trained deep neural network and the optimization algorithm with such equipment, manufacturers can enhance traditional forming processes with advanced computational intelligence.

One primary advantage is the achievement of precise and controlled deformation. Presses and power hammers are capable of delivering high forces with accurate control over displacement and speed. When guided by the optimization algorithm, these machines can apply the exact force and motion parameters necessary to produce the desired workpiece shape and microstructure.

Moreover, presses and power hammers offer versatility in handling different forming processes, including both cold and hot forging. Their robust construction allows them to withstand the demands of high-temperature operations in hot forging, where material ductility is increased, and complex shapes can be formed more easily.

Finally, the use of presses or power hammers facilitates easier implementation of the method in existing manufacturing environments. Many facilities already employ such equipment, so incorporating the trained deep neural network and optimization algorithm can be achieved with minimal disruption.

In another advantageous embodiment, the forming device further includes a sensor module.

The inclusion of the sensor module enhances the user experience by providing real-time feedback and visualizations of the forming process. The data collected can be displayed on a user-friendly interface or dashboard, allowing operators to monitor key metrics such as temperature distribution, strain maps, force curves, and deformation progress. This immediate access to process information empowers users to make informed decisions. Furthermore, the data collected by the sensor module can be used to retrain and/or update the deep neural network.

Moreover, the sensor module can be configured to alert the user of any anomalies or deviations from predefined process parameters. For instance, if the system detects an unexpected increase in temperature, excessive deformation force, or discrepancies in the workpiece shape, it can generate visual or auditory alerts. These notifications enable the user to intervene promptly, preventing potential defects, equipment damage, or safety hazards.

Finally, the sensor module supports predictive maintenance by informing the user about the condition of the forming device and tooling. By monitoring trends in force application, tool displacement, and temperature fluctuations, the system can predict when maintenance or tool replacement might be necessary.

In another advantageous embodiment, the sensor module includes at least one of: a temperature sensor, and a CMOS camera.

The sensor module equipped with measurement technologies, such as a CMOS camera or temperature sensor in the form of an infrared camera, which enable precise and continuous monitoring of critical parameters like the shape of the workpiece and its temperature profile during the forming process.

The ability to measure the real-time shape of the workpiece is particularly advantageous. By utilizing high-resolution CMOS cameras, the sensor module can capture detailed images of the workpiece as it undergoes deformation. This visual data allows for immediate detection of deviations from the desired shape, enabling the system to make prompt adjustments. Moreover, the CMOS camera can be used for Digital Image Correlation, a non-contact optical method that tracks and analyzes changes in images to measure deformation and strain across the surface of the workpiece. DIC facilitates full-field strain mapping, providing detailed information on how the material responds to the forming process.

By applying DIC, the system generates comprehensive strain measurements, which are crucial for validating the predicted strain distributions from the deep neural network and identifying localized areas of high strain that may lead to defects. This information can be fed back into the optimization algorithm to adjust process parameters such as deformation speed, force, and tool displacement in real time.

Similarly, the inclusion of IR cameras facilitates the measurement of the temperature profile of the workpiece throughout the forming process. Temperature is a critical factor influencing material properties and flow behavior, especially in hot forging operations. Accurate temperature data allows the system to maintain the workpiece within optimal thermal conditions, preventing issues such as overheating or insufficient ductility. By monitoring temperature in real time, the forming device can adjust parameters like deformation speed and force to achieve the desired microstructure and mechanical properties.

In addition to CMOS and IR cameras, the sensor module can include other types of sensors such as force sensors, displacement sensors, and acoustic emission sensors. Force sensors measure the actual forces applied during the forming process, providing data to verify and adjust the deformation force parameter in real time. Displacement sensors track the movement of the tool and workpiece, ensuring that the tool displacement aligns with the optimized values from the algorithm. Acoustic emission sensors detect the onset of micro-cracks or other defects within the material, allowing for immediate corrective action.

In another advantageous embodiment, the controller is configured to adjust the input device data based on real-time data received from the sensor module.

The sensor module can be directly connected to the deep neural network as well as the optimization algorithm, serving as an online, real-time data input system that enhances process control. The real-time data collected by the sensors-such as the shape of the workpiece and its temperature profile-are fed directly into the neural network which allows for updating its predictions under actual operating conditions. Subsequently, the optimization algorithm can then optimize the process parameters, i.e. input device data for example deformation force, deformation speed, tool displacement, and tool geometry, of each forming step of a forming sequence dynamically based on the real-time data.

The process parameters resulting from the real-time optimized forming sequences then serve as input to the controller. The controller uses these optimized parameters to adjust the forming device instantaneously, including making precise adjustments to the drive mechanism and tool configurations. This in-situ control capability ensures that any variations or anomalies detected by the sensors are promptly corrected, minimizing the risk of defects and material waste.

A further aspect of the present disclosure relates to a forming system comprising a forming device, a trained deep neural network, input device data executed by the forming device and a workpiece. Furthermore, the input device data are determined by the trained deep neural network and the optimization algorithm.

The inclusion of a trained deep neural network and optimization algorithm within the forming system enables the precise determination of input device data for forming sequences, enhancing the accuracy and efficiency of the forming process. The system allows comprehensive optimization across multiple stages, reducing dependency on manual expertise, minimizing errors, and accelerating setup.

The solutions according to the present disclosure can be combined as desired and further improved by the following embodiments that are advantageous on their own in each case. Unless specified to the contrary, the embodiments can be readily combined with each other.

Furthermore, by studying these particular embodiments and figures, further advantageous embodiments of the present disclosure may become apparent to a person skilled in the art.

### Brief Description of the Drawings

The following figures are used to describe embodiments of the present disclosure. They show:
Fig. 1: a schematic frontal view of a forming device with a workpiece;
Fig. 2: a schematic framework of the training of a deep neural network within one forming step building a forming sequence;
Fig. 3: a schematic framework of the optimization of input device data via an optimization algorithm and a trained deep neural network;
Fig. 4: a schematic visualization of a model of multi-stage forming process;
Fig. 5: a schematic visualization of a control of a tool of a forming device based on an optimized input device data using a trained deep neural network and an optimization algorithm; and
Fig. 6: a schematic visualization of a model of a two-stage forming process with a sensor module.

### Description of Embodiments

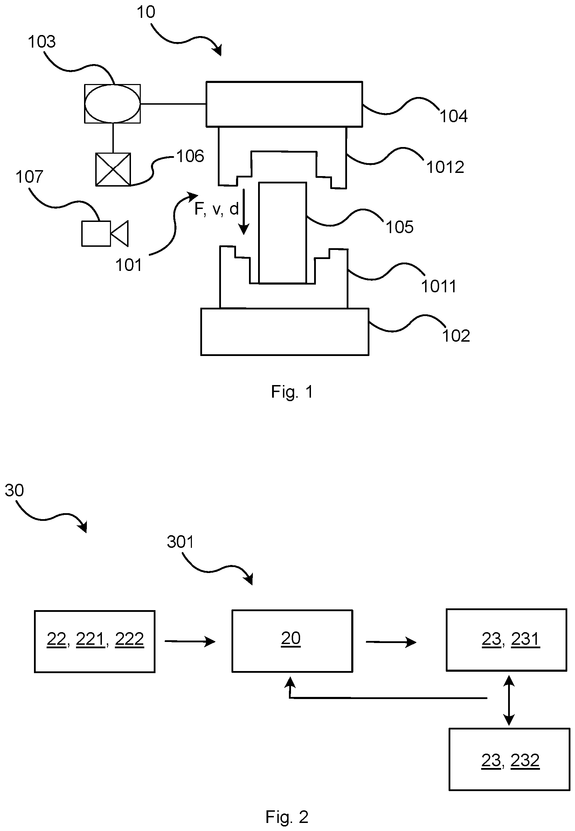

**Figure 1** shows a schematic frontal view of a forming device 10 with a workpiece 105. The forming device 10 includes a tool 101 consisting of an upper die 1012 and a lower die 1011. The upper die 1012 is connected to a ram 104 and the lower die 1011 is supported from the bottom via a table 102.

The ram 104 pushes the upper die 1012 down towards the lower die 1011 with force *F* and deformation speed v and deforms the workpiece 105. Moreover, the ram 104 is powered by a drive mechanism 103, wherein the drive mechanism 103 is a hydraulic actuator. The hydraulic actuator provides controlled force *F* and deformation speed *v* to the ram 104, enabling precise deformation of the workpiece 105 when it displaces the ram 104 with the upper die 1012 by displacement d. The drive mechanism 103 is connected to a hydraulic system that includes a pump, a reservoir, and control valves, allowing for adjustable pressure and flow rate to the ram 104.

To achieve a desired form of the workpiece 105, the upper die 1012 is pushed repetitively against the workpiece 105 in a multistage forming process, which is hot forging in this embodiment. Each stage incrementally deforms the workpiece 105 closer to its final shape. Eventually, the workpiece 105 attains the form modelled by the upper and lower dies 1012 and 1011.

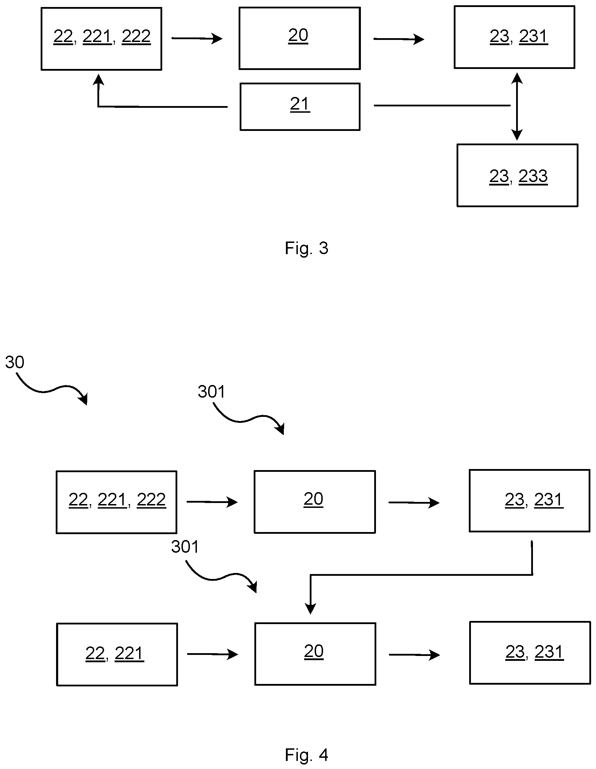

Moreover, the forming device 10 includes a controller 106 that interfaces with the drive mechanism 103 to regulate the operation of the ram 104. The controller 106 receives input, i.e. deformation force *F*, displacement d as well as deformation speed *v*, from an optimization framework including a trained deep neural network 20 and an optimization algorithm 21 (see Fig. 3). Based on this data, the controller 106 controls the drive mechanism 103 to achieve the desired process parameters and eventually desired workpiece 105.

The forming device 10 is designed to allow process parameters to be changed between the forming stages. By varying the force *F* displacement d and deformation speed *v* for each stage, the forming process is optimized to reach desired deformation of the workpiece 105 at each stage.

Finally, the optimization framework shown in Fig. 3 is also capable of optimizing the shape of the tool 101. To enhance the efficiency of the multistage forming process, the forming device 10 features an automatic tool adjustment mechanism (not shown), which is linked to the controller 107. This mechanism allows for repositioning or exchanging the tool 101 i.e. upper die 1012 and/or lower die 1011 between forming stages without manual intervention.

**Figure 2** shows a schematic framework of training a deep neural network 20 within one forming step 301 building a forming sequence 30. The deep neural network 20 has at its input data 22 input device data 221 and input workpiece data 222. The input device data 221 are deformation speed *v*, displacement *d* of an upper die 1012 in vertical direction as well as deformation force *F*, which is applied on a workpiece 105, and a shape of a tool 101, i.e., of the upper die 1012 as well as of a lower die 1011 (see Fig. 1).

Moreover, the input data 22 are partially real data gathered during an actual forming process and partially, these are generated by a finite element simulation that simulates the forming process. The simulation replicates the physical behaviour of the material and the interaction between the workpiece 105 and the tool 101 (upper die 1012 and lower die 1011) under different sets process parameters.

The FE-based simulation incorporates material models that capture the elastic-plastic behavior of the workpiece 105, including strain hardening, anisotropy, and strain-rate dependency. Thermal effects are also included. It offers a physical-based mapping between the input data 22 and an output data 23, which consist of the same parameters as those predicted by the deep neural network 20.

Specifically speaking, the deep neural network 20 predicts a deformed shape of the workpiece 105 cause by the tool 101, which is one part of the output data 23. Together with the shape, the network 20 also predicts the strain and as well as temperature distribution over the deformed workpiece 105. These variables also build the predicted output data 231 by the network 20.

As far as the architecture is concerned, the deep neural network 20 consists of a classical fully connected layers, comprising an input layer, multiple hidden layers, and an output layer. The input layer has the same dimensions as the input data 22, and the output layer corresponds to the output data 23. The use of such an architecture in this embodiment is advantageous for modelling complex nonlinear relationships inherent in the input data, such as the shapes of the workpiece 105 and the tool 201, and the process parameters.

During the training stage, the predicted output data 231 are compared with a ground truth output data 232 using a loss function. The ground truth output data 232 were obtained using the real measurements as well as the FE-based simulation.

Moreover, the loss function is a mean square error (MSE) in this embodiment. After the loss is computed, it is backpropagated through the deep neural network 20 to update the weights and biases of the network layers. This process utilizes a stochastic gradient to minimize the loss function iteratively. The deep neural network 20 training continues over multiple epochs until the loss converges to a minimal value, where the percentual difference between the predicted and ground truth data is less than three percent, or reaches a predefined threshold, ensuring that the predicted output data 231 closely match the ground truth data 232.

The summary of the input 22 and output data 23 and their dimensions is given in the following table.

| Input data 22 | | Output data 23 |
|---|---|---|
| Input device data 221 | Input workpiece data 222 | - |
| Deformation force F (1) | Workpiece shape (implicit) | Workpiece shape (implicit) |
| Deformation speed v (1) | Workpiece temperature (100x1) | Workpiece temperature (100x1) |
| Tool displacement d (1) | - | Workpiece strains (100x3) |
| Shape of the tool (50x3) | - | - |

As can be seen the deformation force *F* as well as speed v and tool displacement *d* are scalars and have hence the dimensions of 1. Moreover, the shape of the tool is modelled explicitly as a polygonal mesh with the size of 50 vertices, each defined by *x*, *y* and *z* position. Together they build the input device data 221. Furthermore, the input workpiece data 222 include the workpiece shape, which is defined implicitly. Hence, there is no predefined dimension or resolution of the shape and temperature as they are defined as mathematical functions depending on the position in the 3D space. Specifically, the workpiece shape is defined as a signed distance function *S*, which implicitly encodes the geometry of the workpiece by representing the distance from any point in space to the nearest surface of the workpiece.

Therefore, the following relationships apply for any point ***p** (x, y, z)* in 3D space:
*S*(***p***) < 0 - *points inside the workpiece* 105
*S*(***p***) = 0 - *points on the surface of the workpiece* 105
*S*(***p***) *>* 0 - *points outside the workpiece* 105

The more points are then sampled from 3D space, the smoother the surface of the workpiece 105 can be determined using the signed distance function *S*.

Furthermore, as far as the output data 22 are concerned, the output workpiece shape is also defined via a signed distance function.

The other variables, such as the temperature and strain fields, are represented as a point cloud, where discrete points in the 3D space are assigned specific values for temperature or strain. Each point in this cloud corresponds to a location within the workpiece 105, with values that define the state of the workpiece 105 at that location. For temperature, the scalar value *T*(**pᵢ**) is defined at each point, and similarly, strain is represented by a tensor *ε*(**pᵢ**) at each point.

In an advantageous embodiment, the predicted data of the temperature and strains at discrete points are interpolated using Radial Basis Function (RBF) interpolation. This method involves constructing a smooth, continuous function that fits the discrete data points of temperature and strain throughout the 3D space of the workpiece.

In yet another advantageous embodiment, the implicit representation is replaced by an explicit one. In this case, both the workpiece shape and the temperature, as well as the strain fields, are no longer described as continuous functions over the 3D space but are instead represented by discrete values at predefined points.

The workpiece shape is explicitly defined as a polygon mesh, where the surface is composed of polygons formed by vertices connected by edges. Each vertex **pᵢ** = (*xᵢ, yᵢ, zᵢ*) represents a point in 3D space, and the collection of these points defines the shape.

**Figure 3** shows a schematic framework of the optimization of input device data 221 via an optimization algorithm 21 and a trained deep neural network 20.

The optimization framework firstly includes the trained deep neural network 20 to predict output data 23 based on input data 22. Moreover, predicted output data 231 are subsequently compared with desired output data 233.

In this embodiment, the predicted output data 231 are the shape of a workpiece 105 after undergoing a deformation caused by a tool of 101 a forming machine 10, wherein the forming machine 10 is a CNC bending machine. Moreover, the predicted output data 231, i.e. the predicted shape of the workpiece 105, are compared with a desired output data 233, which is the desired output shape of the workpiece 105.

The difference between the predicted 231 and desired output data 233 is compared using a metric called Chamfer distance which is subsequently used as an input to the optimization algorithm 21. The optimization algorithm 21 is a simulated annealing algorithm. The simulated annealing algorithm iteratively adjusts the input device parameters of the forming machine 10 - deformation speed *v* as well as force *F*, tool shape and tool displacement *d* to minimize the Chamfer distance between the predicted and desired shapes of the workpiece 105.

This optimization continues until a termination condition is met, i.e. when the minimum threshold for the Chamfer distance is reached which is in this embodiment set to be 0.1 mm. This value represents the acceptable maximum deviation between the predicted and desired shapes of the workpiece 105.

Once the Chamfer distance falls below this threshold, the optimization process concludes, and the optimal input device data 221 are identified. Alternatively, the optimization framework finishes when a predefined number of iterations of e.g. 50 000 is reached.

Upon reaching the termination condition, the optimized input device data 221 are then used to control the forming machine 10 via a controller 106 (see Figure 1). This ensures that the workpiece 105 produced closely matches the desired shape.

Moreover, in order to achieve realistic and usable optimized shapes of the tool 101 (see Figure 1), the optimization algorithm 21 considers not only the geometric dimensions of the tool 101 but also factors such as manufacturability and compatibility with the existing forging equipment. Specifically speaking the algorithm 21 avoids designs with intricate geometries that are difficult or expensive to machine. Hence, the optimization algorithm 21 takes into account the specifications and limitations of the forming machine 10. This includes maximum allowable tool dimensions, weight constraints, mounting interface requirements, and operational parameters like maximum force and speed.

**Figure 4** shows a schematic visualization of a model of multi-stage forming process, wherein the forming process is hot forging. In this embodiment there are two stages, i.e. a workpiece 105 undergoes two deformations within two forming steps 301, which form an overall forming sequence 30.

Furthermore, Figure 4 already depictures a trained deep neural network 20, via a framework shown in Figure 2, wherein input device data 221 have been optimized using an optimization framework shown in Figure 3.

In the first stage, an ingot in the shape of a cuboid is used as an input workpiece 105, which builds the input workpiece data 222, along with the set of optimized input device data 221 consisting of the deformation force *F*, deformation speed *v*, tool displacement *d* as well as shape of a tool 101. Afterwards the trained deep neural network 20 predicts the output data 23, 231 which is the deformed shape of the workpiece 105 as well as temperature distribution along the workpiece 105.

In the second stage the output data 23, 231 from the first stage along with the optimized input device data 221 are used as input data 22 to predict the final output data 23, 231, i.e. the final shape of the workpiece 105 and its temperature distribution after the second stage of the hot forging process.

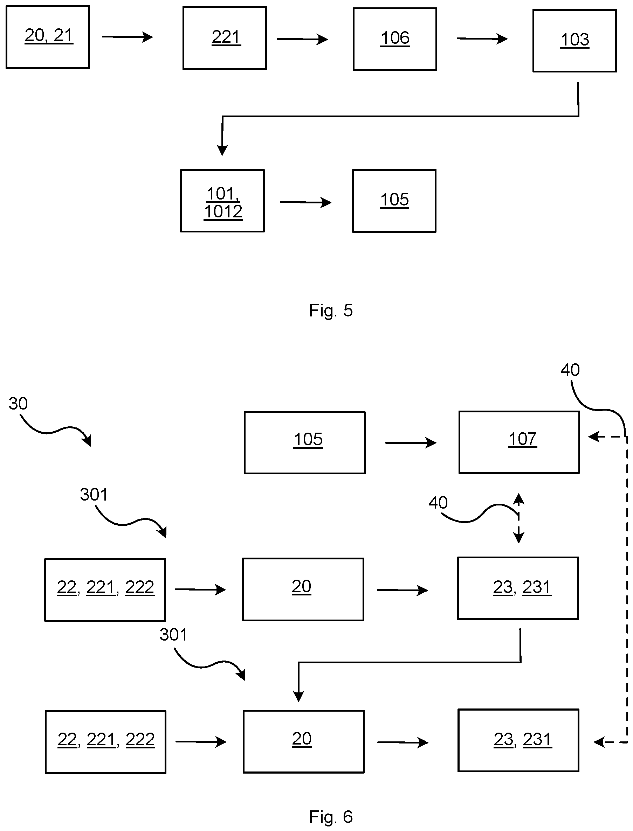

**Figure 5** depicts a schematic visualization of a control of a tool 101 of a forming device 10 (see Figure 1) based on an optimized input device data 221 using a trained deep neural network 202 and an optimization algorithm 21.

Based on the optimization framework shown in Figure 3, the input device data 221 is optimized by the optimization algorithm 21 to minimize a difference between predicted 231 and desired output data 233. Using this framework, a deformation force *F* as well as a deformation speed *v*, a shape of the tool 101 and a tool displacement *d* were optimized with respect to producing a desired shape of a workpiece 105, i.e., desired output data 233, which is a crankshaft in this particular embodiment. Further, the framework identified a forming sequence 30 consisting of five forming steps 301 (see Figure 4), i.e., the final optimized set consists of five input device data 221, one for each forming step 301 with specific, optimized input device data 221 for each of them.

The input device data 233 serve as input to a controller 106. The controller 106 in turn drives a drive mechanism 103, which is a pneumatic press mechanism. The drive mechanism 103 is connected and moves an upper die of the tool 101. Finally, the tool 101 comes into contact with a workpiece 105 and deforms it in the five forming steps 301 within the forming sequence 30 (see Figure 4) based on the optimized input device data 221 into the desired output shape of the workpiece 105.

**Figure 6** shows a schematic visualization of a model of a two-stage forming process with a sensor module 107, wherein the forming process is cold forging. Hence the forming process modelled as a forming sequence 30 consists of two forming steps 301.

The sensor module 107 is equipped with a set of real-time sensors, specifically speaking, a CMOS camera and an IR camera. Compared to the model shown in Figure 4, output data from a trained deep neural network 20 are compared with a real data of a workpiece 105 measured via the sensor module 107 in each forming step 301 of the forming sequence 30.

The advantage of this embodiment lies in a continuous comparison 40 of real-time data measured by the sensor module 107 with the predicted output data 231 by the trained deep neural network 20.

Specifically, the deep neural network 20 predicts the output shape and thermal characteristics of the workpiece 105, which are subsequently compared to the data measured by a CMOS camera and an IR camera. If the difference between the predicted output data 231 and the measured data exceeds a predefined threshold of e.g. 5 percent, they replace input workpiece data 222 for the next forming step 301 of the forming sequence 30 computed via the optimization framework shown in Figure 3.

In a particularly advantageous embodiment, there is no threshold, and the input workpiece data 222 are determined by the sensor module 107 within each forming step 301.

Furthermore, always when the sensor module 107 measures the data that serve as input workpiece data 222 a model predictive control strategy is executed in real-time to dynamically adjust input device data 221. This re-optimisation serves to fine-tune or adjust the input device data 221 for all subsequent forming steps 301 of the forming sequence 30, i.e. deformation speed *v* and deformation force *F*, to account for the observed discrepancy between the predicted and measured data.

This iterative process allows for real-time corrections to the forming sequence 30, ensuring that the process can adapt to unforeseen variations in material behaviour, environmental conditions, or forming machine performance.

### Reference list

- 10: Forming device
- 101: Tool
- 1011: Lower die
- 1012: Upper die
- 102: Table
- 103: Drive mechanism
- 104: Ram
- 105: Workpiece
- 106: Controller
- 107: Sensor module

- 20: Deep neural network
- 21: Optimization algorithm
- 22: Input data
- 221: Input device data
- 222: Input workpiece data
- 23: Output data
- 231: Predicted output data
- 232: Ground truth output data
- 233: Desired output data

- 30: Forming sequence
- 301: Forming step

- 40: Comparison

## Claims

1. A method for adjusting input device data (221) of at least one forming step (301) in a forming sequence (30) comprising the following steps:
- generating pairs of input data (22) and corresponding ground truth output data (232) of the at least one forming step (301) in the forming sequence (30) via a forming device (10) and/or a computer-based simulation, wherein the input data (22) comprise the input device data (221) of the forming device (10) and input workpiece data (222), wherein the input device data (221) include at least one of: a shape of a tool (101), deformation force *F*, deformation speed *v*, tool displacement *d*; the input workpiece data (222) include at least an input shape of a workpiece (105); and the output data (23) include at least an output shape of the workpiece (105);
- providing a deep neural network (20) configured to model a forming process performed by the forming device (10) to form a workpiece (105), wherein the deep neural network (20) comprises an input layer, one or more hidden layers, and an output layer;
- supplying the deep neural network (20) with the pairs of the input data (22) and the corresponding ground truth output data (232);
- training the deep neural network (20) to predict output data (231) of the at least one forming step (301) based on the input device data (221) and the input workpiece data (222) of the at least one forming step (301) by minimizing a difference between the predicted output data (231) and the ground truth output data (23, 232); and
- using the predicted output data (231) to adjust the input device data (221) of the forming device (10).

2. The method according to claim 1, further including optimization of the input device data (221) of the at least one forming step (301) in the forming sequence (30) using the trained deep neural network (20) to obtain desired output data (233), wherein the input device data (221) of the at least one forming step (301) are adjusted via an optimization algorithm (21) to minimize a difference between the predicted output data (23, 231) and the desired output data (233).

3. The method according to claim 2, wherein the optimization algorithm (21) is a genetic algorithm, simulated annealing algorithm, or reinforcement learning based algorithm.

4. The method according to claims 2 or 3, wherein the trained deep neural network (20) and/or the optimization algorithm (21) are operated on a cloud server.

5. The method according to any one of the preceding claims, wherein the input data (22) further include at least one of: material properties of the workpiece (105), temperature of the tool (101), and initial temperature of the workpiece (105).

6. The method according to any one of the preceding claims, wherein the output data (23) further include at least one of: stress distribution, strain distribution, and temperature distribution within the workpiece (105).

7. The method according to any one of the claims 2 to 6, wherein the optimization algorithm (21) is configured to minimize production time of a desired shape of the workpiece (105) and/or a microstructure of the workpiece (105) and/or energy consumption of a forming process.

8. The method according to any of the preceding claims, wherein the forming process is cold or hot forging process.

9. The method according to any one of the preceding claims, further comprising updating or retraining the deep neural network (20) with data collected during the forming process.

10. A forming device (10) for forming a workpiece (105) comprising
- a tool (101) comprising an upper die (1012) and a lower die (1011);
- a drive mechanism (103) configured to actuate the upper die (1012) of the tool (101);
- a controller (106) configured to control the drive mechanism (103);
- a trained deep neural network (20) with input device data (221) according to any one of the claims 1 to 9; and
- an optimization algorithm (21) according to any one of the claims 2 to 9, wherein the controller (106) is configured to control the drive mechanism (103) to execute the input device data (221) determined by the trained deep neural network (20) and the optimization algorithm (21).

11. The forming device (10) according to claim 10, wherein the forming device (10) is a press or a power hammer.

12. The forming device (10) according to claim 10 or 11, wherein the forming device (10) further includes a sensor module (107).

13. The forming device (10) according to any one of the preceding claims 10 to 12, wherein the sensor module (107) includes at least one of: a temperature sensor, and a CMOS camera.

14. The forming device (10) according to claims 12 or 13, wherein the controller (106) is configured to adjust the input device data (221) based on real-time data received from the sensor module (107).

15. A forming system comprising
- a forming device (10) according to any one of claims 10 to 14;
- a trained deep neural network (20) according to any one of claims 1 to 9;
- an optimization algorithm (21) according to any one of claims 2 to 9;
- input device data (221) executed by the forming device (10); and
- a workpiece (105),
wherein the input device data (221) are determined by the trained deep neural network (20) and the optimization algorithm (21).
